# EUROPÄISCHE PATENTANMELDUNG

(11) **EP 3 486 514 A1**
(43) Veröffentlichungstag der Anmeldung: **22.05.2019**
(21) Anmeldenummer: 17202333.5
(22) Anmeldetag: 17.11.2017
(51) Int. Cl.: F16D 1/10, F16H 1/30, F16H 57/02

(54) **KUPPLUNG, SOWIE EINE MOTOR-GETRIEBE-ANORDNUNG MIT EINER SOLCHEN KUPPLUNG**

(71) Anmelder: IMS Gear SE & Co. KGaA, 78166 Donaueschingen (DE)
(72) Erfinder: Albert, Simon, 79877 Friedenweiler (DE); Kieninger, Matthias, 78089 Unterkirnach (DE)
(74) Vertreter: Westphal, Mussgnug & Partner Patentanwälte mbB

(57) **Zusammenfassung**

Die vorliegende Erfindung betrifft eine Kupplung (2) zum Übertragen eines Drehmomentes umfassend:
-ein erstes Kupplungsteil (10) und ein zweites Kupplungsteil (13), die koaxial und benachbart auf einer Längsachse (6) ausgerichtet sind,
-wobei an dem ersten Kupplungsteil (10) mindestens auf einem dem zweiten Kupplungsteil (13) zugewandten freien Ende (11) eine Ausnehmung (12) vorgesehen ist,
-wobei das zweite Kupplungsteil (13) zum formschlüssigen Verbinden einen Mitnehmer (15) aufweist, der formschlüssig in die Ausnehmung (12) eingreift,
-wobei die Ausnehmung (12) aus mindestens einer Bohrung (16) mit einem Durchmesser (D1) gebildet ist, und
-wobei die mindestens eine Bohrung (16) parallel und beabstandet zu der Längsachse (6) angeordnet ist.

## Beschreibung

Die vorliegende Erfindung betrifft eine Kupplung zum Übertragen eines mechanischen Drehmomentes zwischen einem ersten Kupplungsteil und einem zweiten Kupplungsteil, ein erstes Kupplungsteil, ein zweites Kupplungsteil sowie eine Motor-Getriebe-Anordnung mit einer Kupplung nach den Oberbegriffen der Patentansprüche 1, 8, 10 und 12.

Kupplungen sind aus dem Stand der Technik in unterschiedlichen Ausgestaltungen bekannt und werden üblicherweise dazu verwendet, ein Drehmoment zwischen zwei Wellen zu übertragen. Hierzu sind die Wellen mit einem ersten und einem zweiten Kupplungsteil gekoppelt, über welche ein Drehmoment übertragen werden kann. Zur Drehmomentübertragung sind die Kupplungsteile im Stand der Technik mit korrespondierenden und formschlüssig ineinandergreifenden Keilwellenprofilen, Polygonprofilen, Zahnwellenprofilen, Kerbverzahnungen, Passfedern oder dergleichen versehen, die eine starre und lösbare Verbindung bilden.

Derartige Kupplungen übertragen häufig große Drehmomente sowie Schwingungen, was zu einem ungünstigen Verschleißverhalten führt. Ein weiteres Problem ist die kostenintensive und technisch aufwändige Fertigung der Kupplung, da diese einerseits besonders platzsparend zwischen dem Motor und dem Getriebe angeordnet sein soll und anderseits hohe Festigkeiten aufweisen soll. Dies erfordert somit hochwertige Werkstoffe sowie aufwändige Fertigungsverfahren. Insbesondere bei Motor-GetriebeAnordnungen ist der Motor oftmals ein standardisiertes Bauteil, so dass das Anarbeiten einer oben genannten Kupplung mit großem Aufwand verbunden ist.

Die Aufgabe der vorliegenden Erfindung ist daher, eine Kupplung bereitzustellen, die kostengünstig herzustellen ist, eine einfache und kostengünstige Montage ermöglicht und bei kleiner Baugröße große Drehmomente übertragen kann.

Die erfindungsgemäße Kupplung mit den Merkmalen des Anspruchs 1 weist den Vorteil auf, dass die Kupplung in einem besonders kostengünstigen Herstellungsverfahren mit einer einfachen Geometrie hergestellt werden kann. Die Kupplungsteile sind dabei derart ausgelegt, dass auch bei einer kleinen Baugröße hohe Drehmomente bei einer vergleichsweise geringen lokalen mechanischen Belastung der Bauteile übertragen werden können, wodurch sich Ersparnisse bei den verwendeten Werkstoffen und den angewandten Herstellungsverfahren ergeben. Dies wird erfindungsgemäß dadurch erreicht, dass die Kupplung ein erstes Kupplungsteil und ein zweites Kupplungsteil umfasst, die koaxial und benachbart auf einer Längsachse bzw. Drehachse ausgerichtet sind. Das erste Kupplungsteil weist an mindestens einem dem zweiten Kupplungsteil zugewandten freien Ende eine Ausnehmung auf und das zweite Kupplungsteil einen Mitnehmer, der zum formschlüssigen Verbinden in die Ausnehmung ganz oder bereichsweise eingreift. Hierzu ist die Ausnehmung aus mindestens einer ersten Bohrung mit einem Durchmesser D1 gebildet, die exzentrisch zu der Längsachse angeordnet ist. Der Mitnehmer des zweiten Kupplungsteils ist aus einem zylinderförmigen Mitnehmer ausgebildet, der ebenfalls gleichermaßen exzentrisch zu der Längsachse angeordnet ist und dessen Durchmesser an den Durchmesser D1 der ersten Bohrung der Ausnehmung angepasst ist. Das zweite Kupplungsteil, bzw. der Mitnehmer kann mittels einer geeigneten Welle-Nabe-Verbindung direkt auf oder an einer Welle oder Ritzel angeordnet sein. Durch den mindestens in der Längsachse exzentrischen Bohrung-Mitnehmer-Formschluss ist eine Drehmomentübertragung bewerkstelligt, wobei die kreisrunden Geometrien dazu geeignet sind, Spannungsspitzen in der Kupplung zu vermeiden. Die mindestens eine Bohrung der Ausnehmung kann somit auf kostengünstige Weise eingearbeitet oder angeformt, vorzugsweise gebohrt oder gefräst, werden, wobei der Boden der Ausnehmung möglichst eben sein sollte.

Vorteilhafte Ausführungsformen sind in den Unteransprüchen offenbart.

Vorzugsweise umfasst die Ausnehmung die mindestens eine erste Bohrung mit dem Durchmesser D1 und mindestens eine zweite Bohrung mit einem Durchmesser D2, die parallel zu der Längsachse ausgerichtet sind. Die erste Bohrung und die zweite Bohrung sind jeweils in einem Abstand und bereichsweise überlappend angeordnet. Der Abstand zwischen der jeweiligen mindestens einen ersten Bohrung und der jeweiligen mindestens zweiten Bohrung bestimmt sich anhand der jeweiligen Mittelpunkte. Beispielsweise kann die Ausnehmung zwei Bohrungen die Form einer arabischen Ziffer "Acht" oder drei in einem Dreieck angeordnete Bohrungen aufweisen. Eine Vielzahl von Bohrungen kann symmetrisch oder unsymmetrisch um die Längsachse angeordnet sein, wobei symmetrische Anordnungen der Bohrungen bevorzugt sind. Nicht symmetrische Anordnungen der Bohrungen können zu einer ungleichmäßigen Belastung der zugehörigen Welle, des Ritzels und der Lager führen. Es versteht sich von selbst, dass die erste Bohrung und die zweite Bohrung auch derart zueinander beabstandet angeordnet werden können, dass diese nicht überlappen.

Vorzugsweise sind die Ausnehmung des zweiten Kupplungsteils und der in die Ausnehmung eingreifende Bereich des ersten Kupplungsteils koaxial zu der Längsachse ausgerichtet. Die koaxiale Ausrichtung kann dabei anhand des Geometrischen-, des Massen- oder des Flächenschwerpunktes bestimmt werden.

Weiter bevorzugt sind der Durchmesser D1 der mindestens einen ersten Bohrung und der Durchmesser D2 der mindestens einen zweiten Bohrung gleich groß bemessen. Die erste Bohrung und die zweite Bohrung können symmetrisch um die Längsachse angeordnet sein, so dass in dem ersten Kupplungsteil und in dem zweiten Kupplungsteil keine Unwucht und daraus resultierende Schwingungen entstehen.

Darüber hinaus ist besonders vorteilhaft, wenn das erste Kupplungsteil und/oder zweite Kupplungsteil eine Nabenbohrung zur Bildung einer Welle-Nabe-Verbindung aufweist. Die Welle-Nabe-Verbindung kann beispielsweise eine kraftschlüssige Verbindung sein. Das erste Kupplungsteil und/oder das zweite Kupplungsteil kann bzw. können auf die Motorwelle bzw. Getriebewelle aufgepresst werden. Eine weitere Bearbeitung der jeweiligen Welle ist nicht notwendig.

Darüber hinaus ist es besonders vorteilhaft, wenn ein zweites freies Ende des ersten Kupplungsteils und/oder ein zweites freies Ende des zweiten Kupplungsteils als Zahnrad, Getriebeschnecke, Gewinde oder als Welle-Nabe-Verbindung ausgebildet ist bzw. sind. Das jeweilige Kupplungsteil kann in das Getriebe oder den Motor integriert werden, so dass das erste Kupplungsteil und/oder das zweite Kupplungsteil die Funktion einer Getriebewelle und/oder einer Motorwelle übernehmen.

Gemäß einer weiteren vorteilhaften Ausgestaltung der vorliegenden Erfindung ist bzw. sind das erste Kupplungsteil und/oder das zweite Kupplungsteil mittels eines Sinterverfahrens hergestellt. Das Sinterverfahren ermöglicht eine besonders kostengünstige und individuelle Fertigung des jeweiligen Kupplungsteils.

Ferner betrifft die vorliegende Erfindung ein erstes Kupplungsteil einer Kupplung zum Übertragen eines Drehmomentes, wobei an mindestens einem freien Ende eine Ausnehmung vorgesehen ist, die dazu eingerichtet ist, ein zweites Kupplungsteil bereichsweise formschlüssig zu umgreifen. Die Ausnehmung umfasst mindestens eine erste Bohrung mit einem Durchmesser D1, wobei die mindestens eine erste Bohrung parallel und beabstandet zu einer Längsachse bzw. Drehachse angeordnet ist.

Darüber hinaus ist besonders vorteilhaft, wenn die Ausnehmung des ersten Kupplungsteils die mindestens eine erste Bohrung mit einem Durchmesser D1 und mindestens eine zweite Bohrung mit einem Durchmesser D2 umfasst, wobei die erste Bohrung und/oder die zweite Bohrung exzentrisch zu der Längsachse angeordnet ist bzw. sind, und wobei die mindestens erste Bohrung und die mindestens zweite Bohrung jeweils zueinander in einem Abstand A beabstandet und bereichsweise überlappend angeordnet sind. Der Abstand A bezieht sich dabei jeweils auf den Mittelpunkt der jeweiligen Bohrungen. Die Anzahl der Bohrungen kann prinzipiell im Rahmen der Fertigungsmöglichkeiten beliebig gewählt werden. So kann auch eine dritte oder eine vierte Bohrung vorgesehen sein. Die Anzahl der Bohrungen kann beispielsweise nach akustischen Gesichtspunkten gewählt werden, um das Vibrationsverhalten der gekoppelten Bauteile zu berücksichtigen. Die Geräuschentwicklung kann mit der Anzahl der Bohrungen gezielt beeinflusst werden.

Des Weiteren betrifft die vorliegende Erfindung ein zweites Kupplungsteil einer Kupplung, wobei das zweite Kupplungsteil an mindestens einem ersten freien Ende einen Mitnehmer umfasst, der aus mindestens einem ersten Zylinderabschnitt mit einem Durchmesser D1' gebildet ist, der dazu eingerichtet ist, in eine Ausnehmung eines ersten Kupplungsteils in der Längsachse bereichsweise und im Umfang vollständig formschlüssig einzugreifen. Der mindestens eine erste Zylinderabschnitt weist einen Durchmesser D1' auf und ist exzentrisch zu der Längsachse des zweiten Kupplungsteils angeordnet.

Besonders vorteilhaft ist es, wenn der Mitnehmer den mindestens einen ersten Zylinderabschnitt mit dem Durchmesser D1' und mindestens einen zweiten Zylinderabschnitt mit einem Durchmesser D2' umfasst. Der Mitnehmer ist dazu eingerichtet, in eine Ausnehmung eines ersten Kupplungsteils bereichsweise und formschlüssig einzugreifen, wobei der mindestens eine erste Zylinderabschnitt und der mindestens eine zweite Zylinderabschnitt parallel zu einer Längsachse bzw. Drehachse ausgerichtet sind, und wobei der mindestens erste Zylinderabschnitt und der mindestens zweite Zylinderabschnitt jeweils in einem Abstand beabstandet bereichsweise überlappend angeordnet sind.

Ein weiterer Aspekt der vorliegenden Erfindung betrifft eine Motor-Getriebe-Anordnung umfassend ein erstes Gehäuse mit einem ersten Flansch zur Aufnahme eines Motors mit einer Motorwelle, ein zweites Gehäuse mit einem zweiten Flansch zur Aufnahme eines Getriebes mit mindestens einer Getriebewelle, und einer Kupplung, wobei durch die Kupplung die Motorwelle mit der mindestens einen Getriebewelle trieblich koppelt und wobei die Kupplung aus einem ersten Kupplungsteil und einen zweiten Kupplungsteil gebildet ist, wobei das zweite Kupplungsteil in eine Ausnehmung des ersten Kupplungsteils formschlüssig bereichsweise eingreift und die Ausnehmung mindestens von einer zu einer Drehachse exzentrisch angeordneten ersten Bohrung gebildet wird.

Vorzugsweise ist das erste Kupplungsteil form-/oder kraftschlüssig mit der Motorwelle verbunden. Das erste Kupplungsteil kann beispielsweise auf die Motorwelle aufgepresst werden, wodurch keine aufwendige Modifizierung der Motorwelle vor der Montage der Kupplung erforderlich ist. Die kraftschlüssige Verbindung mit der Motorwelle ermöglicht aufgrund der Formgebung des Kupplungsteils die Übertragung hoher Drehmomente. Weiterhin kann das erste Kupplungsteil eine der mindestens einen Getriebewelle bilden. Dadurch ist die Schnittstelle bei einer erfindungsgemäßen Motor-Getriebe-Anordnung vom Fügen der Verzahnung im Getriebe zum Fügen der Kupplung verlagert, so dass einerseits ein Risiko einer Verzahnungsbeschädigung des Getriebes reduziert ist und andererseits das Getriebe bei Transport und Montage verschlossen ist und gegen einen Schmutzeintrag geschützt ist. Die Motor- und die Getriebemontage kann somit voneinander unabhängig erfolgen.

Gemäß einer weiteren vorteilhaften Ausgestaltung ist zwischen dem ersten Flansch und dem zweiten Flansch ein scheibenförmig und flächig ausgebildetes Verbindungsmittel angeordnet. Das Verbindungsmittel sollte eine möglichst geringe Dicke aufweisen, damit der Abstand zwischen dem ersten Flansch und dem zweiten Flansch möglichst klein gehalten ist, wodurch die Baugröße der Motor-Getriebe-Anordnung möglichst klein gehalten ist.

Vorteilhafterweise ist das Verbindungsmittel ein beidseitiges klebendes Band, bzw. ein Doppelklebeband. Ein derartiges doppelseitiges Klebeband ist elastisch und dämpft daher die zwischen dem Motor und dem Getriebe übertragenen Schwingungen. Zudem wird die Geräuschentwicklung gering gehalten. Das Verbindungsmittel kann dabei ringförmig oder als Scheibe ausgebildet sein.

In einer weiteren vorteilhaften Ausführungsform ist der erste Flansch mit dem ersten Gehäuse einstückig ausgebildet und/oder der zweite Flansch mit dem zweiten Gehäuse einstückig ausgebildet. Hierdurch entfällt eine technisch aufwendige Verschraubung des jeweiligen Flansches mit dem Gehäuse.

Das Verbindungsmittel weist vorteilhafterweise wenigstens eine Öffnung zur Durchführung eines Ritzels oder der Motorwelle auf und ist dabei vorzugsweise ringförmig ausgebildet. Das Verbindungsmittel kann weiterhin wenigstens eine nicht zentrische Durchbohrung aufweisen. In diesem Falle weist zumindest einer der beiden Flansche wenigstens eine, vorzugsweise stiftförmig ausgebildete Haltenase auf, die durch die nicht zentrische Durchbohrung des Verbindungsmittels durchgreift und in eine mit der Haltenase korrespondierende Aufnahmetasche des anderen Flanschs formschlüssig eingreift. Eine derartige Haltenase gewährleistet eine drehfeste Verbindung zwischen dem Motor und dem Getriebe.

Gemäß einer weiteren vorteilhaften Ausgestaltung der vorliegenden Erfindung ist das Getriebe als ein Zahn-, Planeten- oder Schneckengetriebe ausgebildet. Das zweite Kupplungsteil kann demnach eine Welle des Getriebes bilden.

Nach einer weiteren Ausgestaltung ist das Getriebe als ein Schraubrad-Planetengetriebe ausgestaltet. Derartige Schraubrad-Planetengetriebe werden mitunter auch als "Koaxial-Getriebe" bezeichnet und bieten die Möglichkeit, noch größere Über- oder Untersetzungsverhältnisse als Planetengetrieben zu realisieren. Die Zahnräder von üblichen Planetengetrieben sind als Stirnräder ausgebildet. Bei Koaxial-Getrieben ist das Sonnenrad als eine Schnecke und die Planetenräder mit einer entsprechend angepassten Planetenradverzahnung ausgebildet. Das Hohlrad weist eine der Planetenradverzahnung entsprechende Innenverzahnung auf.

Ein besonders auffälliges Merkmal derartiger Schraubrad-Planetengetriebe ist die Tatsache, dass die Planetenradachsen nicht parallel zur Drehachse der Schnecke, sondern windschief hierzu verlaufen. Derartige Schnecken-Planetengetriebe sind beispielsweise in der WO 2015/036328 A1 und der EP 2 166 252 A1 offenbart. Neben der hohen Über- oder Untersetzungsverhältnisse stellen derartige Schnecken-Planetengetriebe ein ruhiges Laufverhalten bei einer geringen Geräuschentwicklung bereit.

Gemäß einer weiteren vorteilhaften Ausgestaltung der vorliegenden Erfindung umfasst das Getriebe mindestens ein Lager, das eingerichtet ist, Axialkräfte der mindestens einen Getriebewelle aufzunehmen. Insbesondere bei einem Getriebe mit einer Getriebeschnecke und/oder einer Schrägverzahnung entstehen hohe Axialkräfte, die nicht durch die Kupplung auf die Motorwelle wirken sollen. Dadurch ergibt sich ein größerer Gestaltungsfreiraum bei der Auswahl des Motors für eine erfindungsgemäße Motor-Getriebe-Anordnung und Kostenvorteile, da die Motorwelle keine nennenswerte Axialkraft aufnehmen muss.

Drei beispielhafte Ausführungsformen der Erfindung werden im Folgenden unter Bezugnahme auf die beigefügten Zeichnungen näher erläutert. Es zeigen
- Figur 1: eine perspektivische Darstellung einer Motor-Getriebe-Anordnung einer ersten erfindungsgemäßen Ausführungsform mit einem Motor, einem Getriebe und einer Kupplung, die ein erstes Kupplungsteil und ein zweites Kupplungsteils umfasst,
- Figur 2a: eine vergrößerte perspektivische Ansicht des ersten Kupplungsteils mit einer Ausnehmung zur formschlüssigen Aufnahme des zweiten Kupplungsteils gemäß Figur 1,
- Figur 2b: eine schematische Ansicht einer Stirnseite des ersten Kupplungsteils gemäß Figur 2a, mit einer ersten Bohrung und einer zweiten Bohrung, die parallel und beabstandet diametral zu einer Längsachse der Kupplung angeordnet sind,
- Figur 3: eine schematische und teilweise geschnittene Ansicht der ineinandergreifenden Kupplungsteile gemäß den Figuren 1 bis 2b,
- Figur 4: eine schematische teilweise geschnittene Ansicht einer erfindungsgemäßen Motor-Getriebe Anordnung, mit dem Motor, einem Getriebe und einer erfindungsgemäßen Kupplung gemäß den Figuren 1 bis 3,
- Figur 5: eine schematische teilweise geschnittene Ansicht einer der erfindungsgemäßen Motor-Getriebe-Anordnung gemäß den Figuren 1 bis 4, dessen Getriebe als Planetengetriebe ausgebildet ist.
- Figur 6a: eine vergrößerte Darstellung des ersten Kupplungsteils gemäß einer zweiten erfindungsgemäßen Ausführungsform, wobei die Ausnehmung in dem ersten Kupplungsteil eine zu der Längsachse exzentrisch ausgebildete Bohrung ist,
- Figur 6b: eine Schnittdarstellung des ersten Kupplungsteils und des zweiten Kupplungsteils gemäß einer zweiten erfindungsgemäßen Ausführungsform gemäß Figur 6a,
- Figur 7a: eine vergrößerte Darstellung des ersten Kupplungsteils gemäß einer dritten erfindungsgemäßen Ausführungsform, wobei die Ausnehmung aus drei Bohrungen gebildet ist, die jeweils zueinander beabstandet und überlappend angeordnet sind, und
- Figur 7b: eine Schnittdarstellung des ersten Kupplungsteils und des zweiten Kupplungsteils gemäß der dritten erfindungsgemäßen Ausführungsform gemäß Figur 7a.

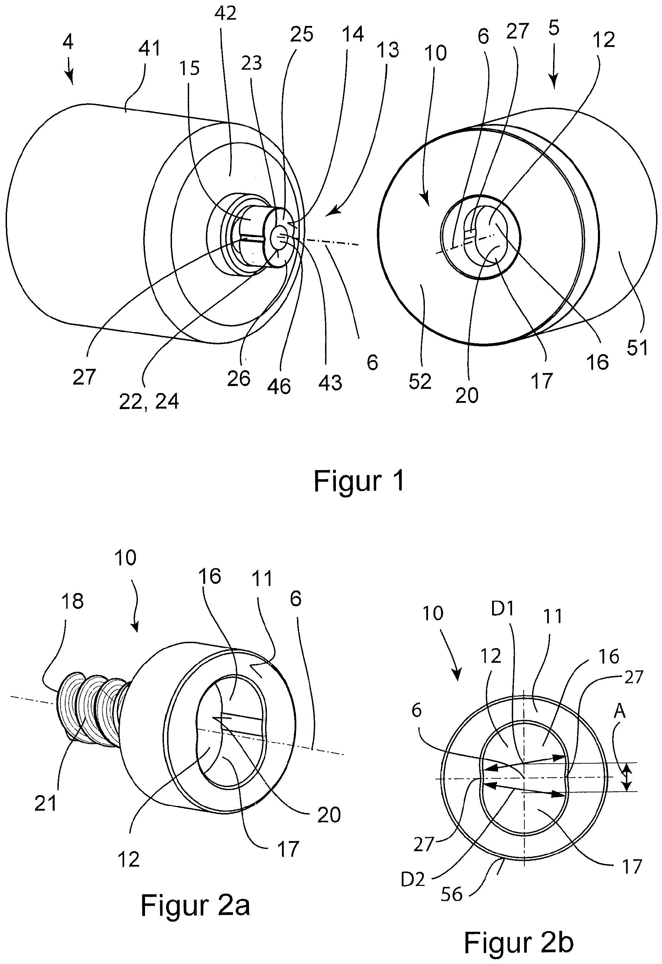

Nachfolgend wird unter Bezugnahme auf die Figuren 1 bis 5 eine Motor-Getriebe-Anordnung 1 mit einer erfindungsgemäßen Kupplung 2 gemäß einem ersten bevorzugten Ausführungsbeispiel der Erfindung im Detail beschrieben.

Die Motor-Getriebe-Anordnung 1 gemäß Figur 1 umfasst einen Motor 4, ein Getriebe 5 und eine Kupplung 2, durch die ein Drehmoment in einer Längsachse 6, die ebenfalls die Drehachse ist, von einer Motorwelle 43 bzw. einem Ritzel auf eine Getriebewelle 53 übertragen ist. Das Getriebe 5 und der Motor 4 der Motor-Getriebe-Anordnung 1 können unabhängig voneinander vormontiert werden und wie nachfolgend erläutert ist zu einer Baueinheit verbunden werden, wodurch sich Vorteile in der Logistik ergeben, da Lieferwege eingespart werden.

Figur 1 ist zu entnehmen, dass der Motor 4 ein Gehäuse 41 und eine Motorwelle 43 umfasst. Das Gehäuse 41 ist mittels mindestens eines Flansches 42 auf der dem Getriebe 5 zugewandten Seite des Gehäuses 41 verschlossen. Die Motorwelle 43 ist durch eine im Flansch 42 angeordnete Öffnung geführt. Auf das freie Ende 46 der Motorwelle 43 ist ein zweites Kupplungsteil 13 mittels eines Presssitzes 24 aufgesetzt bzw. aufgepresst, das einen Mitnehmer 15 bildet.

Das zweite Kupplungsteil 13 umfasst ein erstes freies Ende 14, ein zweites Ende 19 und eine Nabenbohrung 23, die zusammen mit der Motorwelle 43 eine kraftschlüssige Welle-Nabe-Verbindung 22 bilden. Alternativ können aus dem Stand der Technik bekannte herkömmliche Welle-Naben-Verbindungen zwischen dem zweiten Kupplungsteil 13 und der Motorwelle 43 verwendet werden. Das erste freie Ende 14 ist auf der dem ersten Kupplungsteil 10 zugewandten Seite angeordnet und das zweite Ende 19 auf der dem Getriebe 5 abgewandten Seite. Die Länge L des zweiten Kupplungsteils 13 bzw. des Mitnehmers 15 ergibt sich aus einem Abstand zwischen dem ersten freien Ende 14 und dem Ende 19.

Das zweite Kupplungsteil 13 bzw. der Mitnehmer 15 ist ein einteiliges Sinterbauteil bestehend aus einem ersten Zylinderabschnitt 25 und einem zweiten Zylinderabschnitt 26. Der erste Zylinderabschnitt 25 und der zweite Zylinderabschnitt 26 sind spiegelsymmetrisch zur Längsachse 6 und zueinander in einen Abstand A angeordnet, so dass der erste Zylinderabschnitt 25 und der zweite Zylinderabschnitt 26 sich in Form der arabischen Ziffer "Acht" überlappen.

Der Abstand A zwischen dem ersten Zylinderabschnitt 25 und dem zweiten Zylinderabschnitt 26 beträgt A = 0,25*(D1'/2 + D2'/2), wobei D1' der Durchmesser des ersten Zylinderabschnitts 25 ist und D2' der Durchmesser des zweiten Zylinderabschnitts 26 ist.

Die Schnittpunkte des ersten Zylinderabschnitts 25 und des zweiten Zylinderabschnitts 26 bilden jeweils einen Übergangsbereich 27, der bevorzug mit einem Übergangsradius versehen ist, der dahingehend von Bedeutung ist, dass der Abstand zwischen den beiden Schnittpunkten im Übergangsbereich 27 mindestens dem Durchmesser der Nabenbohrung 23 entsprechen muss. Dementsprechend sind die Durchmesser D1' und D2' ebenfalls größer als der Durchmesser der Nabenbohrung 23.

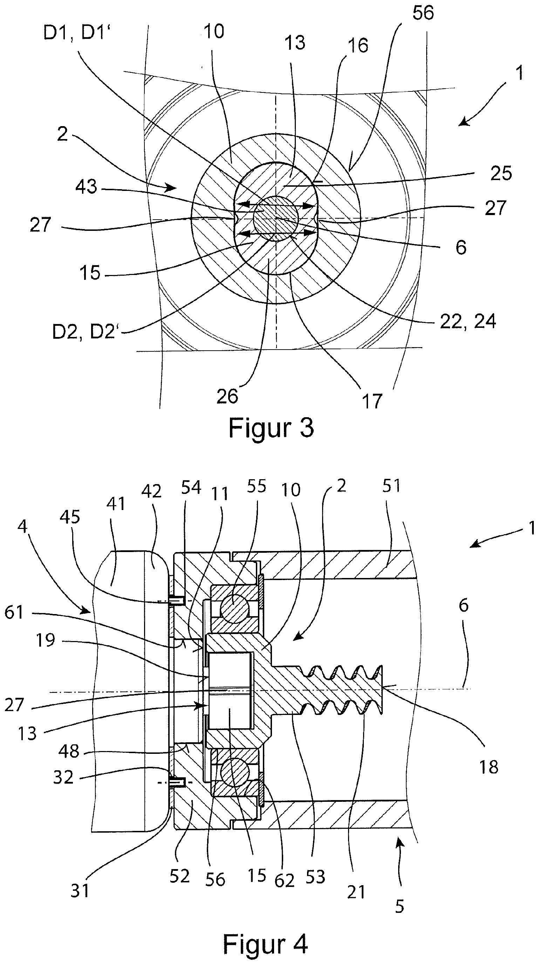

Das zweite Kupplungsteil 13 greift zum formschlüssigen Verbinden in ein erstes Kupplungsteil 10 ein, welches in den Figuren 2a und 2b dargestellt ist. Das erste Kupplungsteil 10 umfasst eine Ausnehmung 12, die mit der Form des ersten Kupplungsteils 10 korrespondiert, wobei eine Tiefe T der Ausnehmung 12 im Wesentlichen der Länge L des Mitnehmers 15 entspricht, siehe Figur 4. Die Tiefe T ist bevorzugt geringfügig größer bemessen als die Länge L, T>L. Die Ausnehmung 12 ist aus einer ersten Bohrung 16 mit einem Durchmesser D1 und einer zweiten Bohrung 17 mit einem Durchmesser D2 gebildet, die in ein erstes freies Ende 11 des ersten Kupplungsteils 10 eingearbeitet oder angeformt sind. Der Durchmesser D1 der ersten Bohrung 16 und der Durchmesser D2 der zweiten Bohrung 17 sind geringfügig größer oder gleich bemessen als der Durchmesser D1' des ersten Zylinderabschnitts 25 und der Durchmesser D2' des zweiten Zylinderabschnitts 26, so dass eine Spiel- bzw. Übergangspassung gebildet ist, bei welcher gilt: D1≥D1' und D2≥D2'. Die erste Bohrung 16 und der erste Zylinderabschnitt 25 sowie die zweite Bohrung 17 und der zweite Zylinderabschnitt 26 sind jeweils koaxial angeordnet. Der Abstand A zwischen der ersten Bohrung 16 und der zweiten Bohrung 17 sowie zwischen dem ersten Zylinderabschnitt 25 und dem zweiten Zylinderabschnitt 26 sind gleich groß.

Die Ausnehmung 12 wird vorzugsweise in das erste freie Ende 11 des ersten Kupplungsteils 10 gefräst oder gebohrt, wobei bevorzugt die erste und die zweite Bohrung 16, 17 gefräst werden, damit ein Boden 20 der Ausnehmung 12 eben ist. In dem dargestellten spezifischen Ausführungsbeispiel ist die Ausnehmung 12 koaxial auf der Längsachse 6 ausgerichtet und die Durchmesser D1, D1', D2, D2' sind gleich groß. Die Durchmesser bzw. die Durchmesserpaarungen D1, D1' und D2, D2' können jedoch unterschiedlich bemessen sein. Auch die Bohrungen 16, 17 bzw. die Zylinderabschnitt 25, 26 können unterschiedlich exzentrisch angeordnet werden, wobei wenigstens eine der Bohrungen 16 ,17 bzw. der Zylinderabschnitt 25, 26 exzentrisch zu der Längsachse 6 angeordnet werden muss.

Der Schnittansicht gemäß Figur 3 ist zu entnehmen, dass das erste Kupplungsteil 10 den Mitnehmer 15 des zweiten Kupplungsteils 13 vollständig über den Umfang und formschlüssig umgreift. Daraus ergibt sich eine besonders große Kontaktfläche zwischen dem ersten Kupplungsteil 10 und zweiten Kupplungsteil 13 und führt zu einer günstigen Spannungsverteilung, insbesondere bei hohen Drehmomenten. Die symmetrische Anordnung der Bohrungen 16, 17 und der Zylinderabschnitt 25, 26 zu der Längsachse 6 ist mechanisch vorteilhaft, da keine zusätzlichen Querkräfte und Biegemomente entstehen.

Figur 4 ist eine teilweise geschnittene Ansicht der Motor-Getriebe-Anordnung 1 entnehmen. Das Getriebe 5 des vorliegenden Ausführungsbeispiels ist als ein Schraubrad-Planetengetriebe ausgebildet. Es versteht sich, dass das Getriebe 5 auch anders ausgebildet sein kann. Das Getriebe 5 besteht aus einem Gehäuse 51, dass auf der dem Motor 4 zugewandten Seite mit einem Flansch 52 verschlossen ist, wobei das Gehäuse 51 und der Flansch 52 einteilig ausgebildet sein können. Das erste Kupplungsteil 10 ist integraler Bestandteil des Getriebes 5 und bildet eine der Getriebewellen 53, welche im Bereich des ersten Endes 11 mittels eines Kugellagers 55 gelagert ist. Das Kugellager 55 ist dabei zwischen einer Zylindermantelfläche 56 und einer inneren Mantelfläche des Flansches 52 angeordnet. Ausgehend von dem Ende 18 des ersten Kupplungsteils 10 ist eine Getriebeschnecke 21 angeformt oder angearbeitet, die beispielsweise mit einem Zahnrad zur Bildung eines Schneckengetriebes zusammenwirken kann.

Darüber hinaus ist in Figur 4 dargestellt, dass zwischen dem Motor 4 und dem Getriebe 5 ein Verbindungsmittel 31 angeordnet ist, durch das der Flansch 42 des Motors 4 und der Flansch 52 des Getriebes 5 miteinander verbunden sind. Das Verbindungsmittel 31 ist eine zweiseitig klebende Folie oder ein zweiseitiges Klebeband. Das Verbindungsmittel 31 ist scheibenförmig ausgebildet und liegt flächig an dem jeweiligen Flansch 42, 52 an. Darüber hinaus sind in dem Verbindungsmittel 31 zwei weitere Durchbohrungen 32 angeordnet, die der Durchführung von Haltenasen 45 dienen, welche in jeweils korrespondierende Aussparungen 54 eingreifen. Durch das Zusammenspiel der Haltenase 45 des Motors 4 mit einer Aussparung 54 des Getriebes 5 ist zusammen mit dem Verbindungsmittel 31 eine drehfeste Verbindung zwischen dem Motor 4 und dem Getriebe 5 hergestellt.

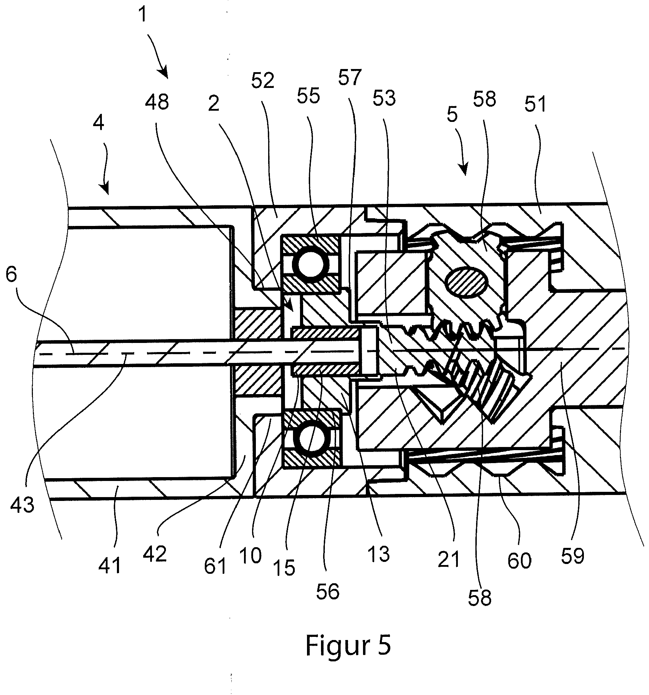

Figur 5 ist eine Schnittdarstellung der erfindungsgemäßen Motor-Getriebe-Anordnung 1 zu entnehmen. Das Getriebe 5 ist als ein Schraubrad-Planetengetriebe ausgeführt, dessen Sonnenrad die Getriebeschnecke 21 des ersten Kupplungsteils 10 ist. Drei Planetenräder 58 kreisen um das Sonnenrad und greifen in ein Hohlrad 60 ein, das eine Innenverzahnung aufweist und an das Gehäuse 51 angearbeitet bzw. angeformt und somit feststehend ist. Die Planetenräder 58 sind drehbar in einem Planetenträger 59 gelagert, wobei die Achsen der Planetenräder 58 windschief zur Längsachse 6 verlaufen. Mittels der Getriebeschnecke 21, der Planetenräder 58 und dem feststehenden Hohlrad 60 wird ein Übersetzungsverhältnis zwischen der Getriebewelle 53 und dem Planetenträger 59 bereitgestellt. Die Planetenräder 58 sowie das Hohlrad 60 sind korrespondierend zu der Getriebeschnecke 21 verzahnt, wodurch bei der Übertragung eines Drehmomentes eine Axialkraft resultiert.

Das Lager 55 ist nach Art eines Axialrillenkugellagers einerseits auf der inneren Mantelfläche 62 auf der dem Getriebe 5 zugewandten Seite des Flanschs 52 gegen den Flansch 52 abgestützt und andererseits auf der Zylindermantelfläche 56 mit einem Steg 57 an der Getriebewelle 53. Die Getriebewelle 53 ist in der Längsachse 6 folglich mittels des Stegs 57 an dem Lager 55 abgestützt, wodurch verhindert ist, dass die Axialkraft auf die Kupplung 2 bzw. auf die Motorwelle 43 übertragen ist bzw. wirkt.

Eine Zentrierung zwischen dem Motor 4 und dem Getriebe 5 erfolgt über einen Zentrierzapfen 48 und eine Zentrierbohrung 61, die formschlüssig ineinandergreifen. Durch das Zusammenwirken des Zentrierzapfens 48 mit der Zentrierbohrung 61 ist die koaxiale Ausrichtung der Motor-Getriebe-Anordnung 1 entlang der Längsachse 6 sichergestellt.

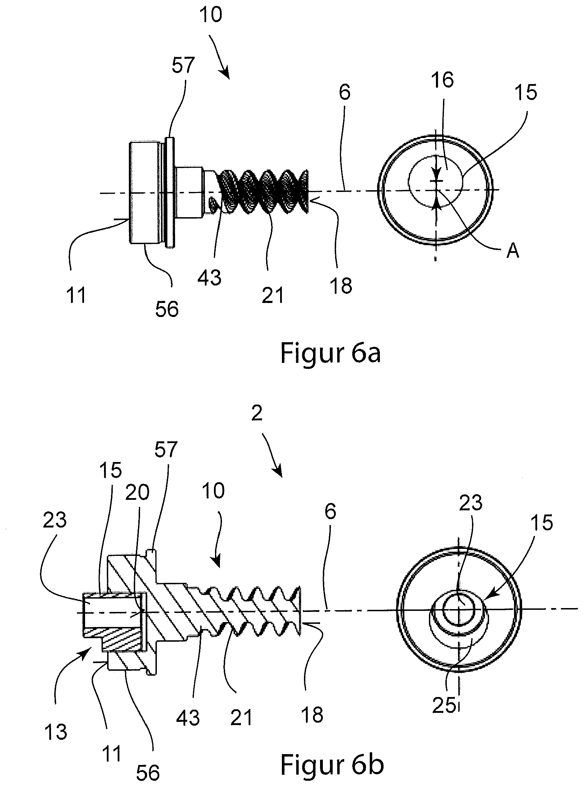

Figuren 6a und 6b ist ein zweites erfindungsgemäßes Ausführungsbeispiel in einer Längsansicht und Seitenansicht zu entnehmen, wobei gleiche bzw. funktional gleiche Teile mit den gleichen Bezugszeichen bezeichnet sind.

Die Ausnehmung 12 des ersten Kupplungsteils 10, dargestellt in Figur 6a, ist aus einer Bohrung 16 gebildet, die in einem Abstand A parallel und beabstandet zu der Längsachse 6 in das erste freie Ende 11 des Kupplungsteils 10 eingearbeitet oder eingeformt ist. Das zweite Kupplungsteil 13 ist korrespondierend zu der Ausnehmung 12 ausgebildet, und weist einen zu der Längsachse 6 exzentrisch angeordneten Mitnehmer 15 auf, der als rotationssymmetrischer Zylinderabschnitt 25 ausgebildet ist.

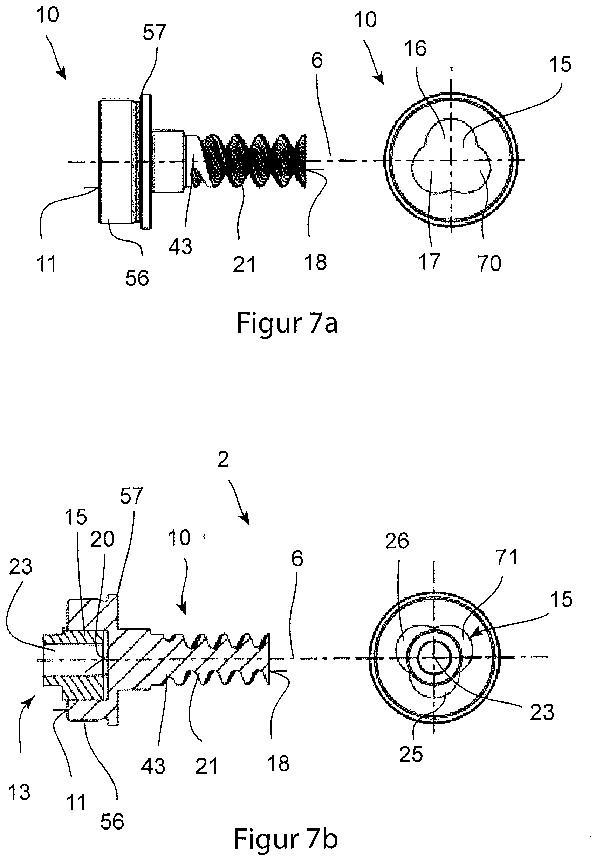

In den Figuren 7a und 7b ist ein drittes erfindungsgemäßes Ausführungsbeispiel in jeweils einer Läng- und Seitenansicht dargestellt. Die Ausnehmung 12 ist aus drei Bohrungen 16, 17, 70 ausgebildet, die jeweils zueinander beabstandet und überlappend angeordnet sind. Die Bohrungen 16, 17, 70 sind in Form eines gleichseitigen Dreiecks angeordnet, wobei in jeder Ecke des gleichseitigen Dreiecks eine Bohrung 16, 17, 70 angeordnet ist.

Der Schnittdarstellung gemäß Figur 7b kann entnommen werden, dass der Mitnehmer 15 mit der Form der Ausnehmung 12 korrespondiert und formschlüssig in die Ausnehmung 12 des ersten Kupplungsteils 10 eingreift. Der Mitnehmer 15 ist aus drei Zylinderabschnitten 25, 26, 71 gebildet ist. Koaxial zu der Längsachse 6 ist die Nabenbohrung 23 eingearbeitet, durch die der Mitnehmer 15 mittels einer Welle-Nabe Verbindung 22 mit einer Motorwelle 43 verbunden werden kann.

Somit kann erfindungsgemäß eine Kupplung 2, ein erstes Kupplungsteil 10, ein zweites Kupplungsteil 13 und eine Motor-Getriebe-Anordnung 1 zur Verfügung gestellt werden, die den Anforderungen einer kostengünstigen Fertigung, einfachen Montage und hoher Zuverlässigkeit beim Betrieb gerecht werden.

Die Anzahl der Bohrungen der Ausnehmung 12 kann prinzipiell frei gewählt werden und auch größer als drei sein. Die Anzahl der Bohrungen der Ausnehmung 12 kann sich am akustischen Verhalten des Motors 4 und des Getriebes 5 orientieren und so gewählt werden, dass die Geräuschentwicklung gering gehalten wird.

### Bezugszeichenliste

- 1: Motor-Getriebe-Anordnung
- 2: Kupplung
- 4: Motor
- 5: Getriebe
- 6: Längsachse
- 10: erstes Kupplungsteil
- 11: erstes freies Ende von 10
- 12: Ausnehmung
- 13: zweites Kupplungsteil
- 14: erstes freies Ende von 13
- 15: Mitnehmer
- 16: erste Bohrung
- 17: zweite Bohrung
- 18: zweites Ende von 10
- 19: zweites Ende von 13
- 20: Boden
- 21: Getriebeschnecke
- 22: Welle/Nabe Verbindung
- 23: Nabenbohrung
- 24: Presssitz
- 25: erster Zylinderabschnitt
- 26: zweiter Zylinderabschnitt
- 27: Übergangsbereich
- 31: Verbindungsmittel
- 32: Durchbohrung
- 41: Gehäuse von 4
- 42: Flansch
- 43: Motorwelle
- 45: Haltenase
- 46: Ende von 43
- 48: Zentrierzapfen
- 51: Gehäuse von 5
- 52: Flansch
- 53: Getriebewelle
- 54: Aussparung
- 55: Kugellager
- 56: Zylindermantelfläche
- 57: Steg
- 58: Planetenrad
- 59: Planetenträger
- 60: Innenverzahnung
- 61: Zentrierbohrung
- 70: dritte Bohrung
- 71: dritter Zylinderabschnitt
- A: Abstand
- D1: Durchmesser von 16
- D1': Durchmesser von 17
- D2: Durchmesser von 25
- D2': Durchmesser von 26
- L: Länge von 15
- T: Tiefe von 12

## Patentansprüche

1. Kupplung (2) zum Übertragen eines Drehmomentes umfassend:
- ein erstes Kupplungsteil (10) und ein zweites Kupplungsteil (13), die koaxial und benachbart auf einer Längsachse (6) ausgerichtet sind,
- wobei an dem ersten Kupplungsteil (10) mindestens auf einem dem zweiten Kupplungsteil (13) zugewandten freien Ende (11) eine Ausnehmung (12) vorgesehen ist, und
- wobei das zweite Kupplungsteil (13) einen Mitnehmer (15) aufweist, der formschlüssig in die Ausnehmung (12) eingreift,
**dadurch gekennzeichnet, dass**
- die Ausnehmung (12) aus mindestens einer ersten Bohrung (16) mit einem Durchmesser (D1) gebildet ist, dass
- die mindestens eine erste Bohrung (16) parallel und beabstandet zu der Längsachse (6) angeordnet ist.

2. Kupplung (2) nach Anspruch 1, **dadurch gekennzeichnet, dass** die Ausnehmung (12) aus der mindestens einen ersten Bohrung (16) mit dem Durchmesser (D1) und mindestens einer zweiten Bohrung (17) mit einem Durchmesser (D2) gebildet ist, und dass die mindestens erste Bohrung (16) und die mindestens zweite Bohrung (17) jeweils in einem Abstand (A) beabstandet und bereichsweise überlappend angeordnet sind.

3. Kupplung (2) nach Anspruch 1 oder 2, **dadurch gekennzeichnet, dass** der Mitnehmer (15) und die Ausnehmung (12) koaxial auf der Längsachse (6) ausgerichtet sind.

4. Kupplung (2) nach einem der vorgenannten Ansprüche, **dadurch gekennzeichnet, dass** der Durchmesser (D1) der mindestens einen ersten Bohrung (16) und der Durchmesser (D2) der mindestens einen zweiten Bohrung (17) gleich groß sind.

5. Kupplung (2) nach einem der vorgenannten Ansprüche, **dadurch gekennzeichnet, dass** das erste Kupplungsteil (10) ein zweites Ende (18) aufweist, wobei das erste Kupplungsteil (10) ausgehend vom zweiten Ende (18) als ein Zahnrad, als eine Getriebeschnecke (21) oder zur Bereitstellung einer Welle-Nabe-Verbindung ausgebildet ist.

6. Kupplung (2) nach einem der vorgenannten Ansprüche, **dadurch gekennzeichnet, dass** das erste Kupplungsteil (10) und/oder das zweite Kupplungsteil (13) mittels eines Sinterverfahrens hergestellt ist bzw. sind.

7. Erstes Kupplungsteil (10) einer Kupplung (2),
- wobei an mindestens an einem freien Ende (11) eine Ausnehmung (12) vorgesehen ist,
- wobei die Ausnehmung (12) mit mindestens einer ersten Bohrung (16) mit einem Durchmesser (D1) ausgebildet ist, und
- wobei die erste Bohrung (16) parallel und beabstandet zu einer Längsachse (6) angeordnet ist.

8. Erstes Kupplungsteil (10) nach Anspruch 7, **dadurch gekennzeichnet, dass** die Ausnehmung (12) aus der mindestens einen ersten Bohrung (16) mit dem Durchmesser (D1) und mindestens einer zweiten Bohrung (17) mit einem Durchmesser (D2) gebildet ist, dass die mindestens eine erste Bohrung (16) und die mindestens eine zweite Bohrung (17) parallel zu der Längsachse (6) angeordnet sind, und dass die mindestens eine erste Bohrung (16) und die mindestens eine zweite Bohrung (17) jeweils in einem Abstand (A) beabstandet und bereichsweise überlappend angeordnet sind.

9. Zweites Kupplungsteil (13) einer Kupplung (2), umfassend:
- einen Mitnehmer (15)
- wobei der Mitnehmer (15) mindestens einen ersten Zylinderabschnitt (25) mit einem Durchmesser (D1') aufweist, und
- wobei der mindestens eine erste Zylinderabschnitt (25) parallel und beabstandet zu einer Längsachse (6) angeordnet ist.

10. Zweites Kupplungsteil (13) nach Anspruch 9, **dadurch gekennzeichnet, dass** der Mitnehmer (15) den mindestens einen ersten Zylinderabschnitt (25) mit dem Durchmesser (D1') aufweist und mindestens einen zweiten Zylinderabschnitt (26) mit einem Durchmesser (D2'), wobei der mindestens erste Zylinderabschnitt (25) und der mindestens zweite Zylinderabschnitt (26) parallel zu der Längsachse (6) angeordnet sind, und wobei der erste Zylinderabschnitt (25) und der zweite Zylinderabschnitt (26) jeweils in einem Abstand (A) beabstandet und bereichsweise überlappend angeordnet sind.

11. Motor-Getriebe-Anordnung (1) umfassend:
- ein erstes Gehäuse (41) mit einem ersten Flansch (42) zur Aufnahme eines Motors (4) mit einer Motorwelle (43),
- ein zweites Gehäuse (51) mit einem zweiten Flansch (52) zur Aufnahme eines Getriebes (5) mit mindestens einer Getriebewelle (53), und
- eine Kupplung (2) nach einem der Ansprüche 1 bis 7
- wobei durch die Kupplung (2) die Motorwelle (43) mit der mindestens einen Getriebewelle (53) trieblich gekoppelt ist.

12. Motor-Getriebe-Anordnung (1) nach Anspruch 11, **dadurch gekennzeichnet, dass** das zweites Kupplungsteil (13) form- und/oder kraftschlüssig mit der Motorwelle (43) gekoppelt ist und/oder dass das erste Kupplungsteil (10) eine der mindestens einen Getriebewelle (53) bildet.

13. Motor-Getriebe-Anordnung (1) nach einem der Ansprüche 11 oder 12, **dadurch gekennzeichnet**, das zwischen dem ersten Flansch und dem zweiten Flansch (52) ein flächig ausgebildetes Verbindungsmittel (31) angeordnet ist.

14. Motor-Getriebe-Anordnung (1) nach einem der Ansprüche 11 bis 13, **dadurch gekennzeichnet, dass** das Verbindungsmittel (31) ein beidseitig klebendes Klebeband ist.

15. Motor-Getriebe-Anordnung (1) nach einem der Ansprüche 11bis 14, **dadurch gekennzeichnet, dass** der erste Flansch (42) mit dem zweiten Gehäuse (41) und/oder der zweite Flansch (52) mit dem zweiten Gehäuse (51) einstückig ausgebildet ist.

16. Motor-Getriebe-Anordnung (1) nach einem der Ansprüche 11 bis 15, **dadurch gekennzeichnet, dass** mindestens einer der Flansche (42, 52) eine Haltenase (45) aufweist, die durch die wenigstens eine nicht zentrische Durchbohrung (32) des Verbindungsmittels (31) hindurchgreift und in eine mit der Haltenase (45) korrespondierende Aussparung (54) des anderen Flanschs (42, 52) formschlüssig eingreift.

17. Motor-Getriebe-Anordnung (1) nach einem der Ansprüche 11 bis 16, **dadurch gekennzeichnet, dass** das Getriebe (5) ein Zahn-, Planeten- oder Schneckengetriebe ist.

18. Motor-Getriebe-Anordnung (1) nach einem der Ansprüche 11 bis 16, **dadurch gekennzeichnet, dass** das Getriebe (5) als ein Schraubrad-Planetengetriebe ausgebildet ist.

19. Motor-Getriebe-Anordnung (1) nach einem der Ansprüche 11 bis 18, **dadurch gekennzeichnet, dass** das Getriebe (5) mindestens ein Lager (55) aufweist, mit welchem mindestens eine Getriebewelle (53) axial gelagert ist.
